**Europäisches Patentamt**

**European Patent Office**

**Office européen des brevets**

(11) Numéro de publication : **0 334 737 B1**

(12) **FASCICULE DE BREVET EUROPEEN**

(45) Date de publication du fascicule du brevet :
**09.12.92 Bulletin 92/50**

(21) Numéro de dépôt : **89400766.5**

(22) Date de dépôt : **17.03.89**

(51) Int. Cl.⁵ : **F04D 29/18,** B63H 1/14,
B64C 11/000, F03B 3/12,
F04D 29/44, F04D 1/04,
F04D 3/00, B63H 5/14,
F03D 1/06

(54) **Machine rotative à déplacement non positif, utilisable comme pompe, compresseur, propulseur, générateur ou turbine motrice.**

Jointe à la demande no. 89903763.4/0408618
(numéro de dépôt/numéro de publication de la
demande européenne) par décision du
03.07.91.
Le dossier contient des informations
techniques présentées postérieurement au
dépôt de la demande et ne figurant pas dans le
présent fascicule.

(30) Priorité : **24.03.88 FR 8803890**

(43) Date de publication de la demande :
**27.09.89 Bulletin 89/39**

(45) Mention de la délivrance du brevet :
**09.12.92 Bulletin 92/50**

(84) Etats contractants désignés :
**AT BE CH DE ES FR GB GR IT LI LU NL SE**

(56) Documents cités :
**BE-A- 372 735**
**DE-A- 3 048 436**
**DE-C- 58 558**
**FR-A- 371 444**
**FR-A- 402 874**
**FR-A- 720 259**
**FR-A- 1 473 299**
**GB-A- 1 335 845**
**GB-A-12 038 191**
**GB-A-14 836 191**
**GB-A-19 338 191**

(73) Titulaire : **Carrouset, Pierre**
**11 Rue Humblot**
**F-75015 Paris (FR)**

(72) Inventeur : **Carrouset, Pierre**
**11 Rue Humblot**
**F-75015 Paris (FR)**

(74) Mandataire : **Kopacz, William James**
**BREESE-MAJEROWICZ, CNIT-WTC1, B.P. 434**
**F-92053 Paris La Défense (FR)**

## Description

La présente invention concerne les machines qui emploient l'énergie cinétique et la force centrifuge pour effectuer des transferts entre des quantités de travail et les fluides,et vice versa.

Les matériels connus par exemple,hélices,turbines centrifuges,hélico-centrifuges,etc.. rencontrent des difficultés notoires quant à la préhension des fluides dès que l'on approche de conditions extrêmes,notamment dans le cas d'augmentation importante des vitesses de rotation.Le terme NPSH requis "Net Positive Suction Head" = pression absolue minimum à l'aspiration définissant les limites d'utilisation des pompes,illustre bien l'obstacle rencontré.L'emploi de la vis d'Archimède à diamêtre croissant,bien connu depuis Léonard de Vinci,est sous forme de tire bouchon de gavage,le remède le plus connu pour éviter la cavitation des liquides,ou la détente éxagérée des gaz à l'admission.

La machine objet de la présente invention permet d'atténuer ces inconvénients grâce à:

-- l'introduction directe du fluide par l'intérieur d'une vis d'Archimède à diamêtre croissant formant rotor,

-- à la présence obligatoire d'une enveloppe circulaire antagoniste et qui guide et comprime les veines de fluide vers le dit rotor,

-- enfin à un meilleur aérodynamisme des bords d'attaque des éléments d'amenée et de guidage,permis par le nouveau circuit du fluide.

Elle est du type comportant au moins une aube enroulée en spirale creuse et au moins une pale située autour de l'axe de rotation de la dite machine, contenues dans une enveloppe circulaire entourant extérieurement le rotor de manière à former une entrée d'amenée du fluide et à s'opposer à sa fuite et selon une première caractèristique cette machine comprend, -un rotor comportant au moins une pale située autour de son axe de rotation, recevant sur l'avant de son bord extérieur au moins une aube enroulée en spirale creuse progressant toutes deux avec un pas différent mais simultanément tant diamêtralement que longitudinalement vis à vis de l'axe de rotation,-une enveloppe circulaire placée en amont du rotor comportant des éléments de compression du fluide, de manière à former une entrée d'amenée du fluide à s'opposer à sa fuite et à le comprimer,le dit fluide étant ensuite entrainé d'une part par les aubes du rotor en un flux périphérique et canalisé d'autre part par les pales du rotor en un flux central.

Selon d'autres caractéristiques de l'invention:

Le profil de la surface de révolution balayée par le bord d'attaque des aubes est délimité latéralement de part et d'autre de son axe de symétrie par un segment plan sensiblement parallèle à l'axe ou légerèment conique,vers l'arrière du rotor,et prolongé ensuite par un segment convergeant vers l'avant du rotor.

A sa naissance au plus près de l'axe chaque pale se confond avec une aube,puis celles-ci voyagent momentanément ensemble.

Le pas des aubes diminue en s'éloignant de l'axe.

Les pales présentent un bord périphérique recourbé dans le sens de rotation du rotor et les aubes ont d'une part,leur bord d'attaque extérieur qui s'incline vers l'arrière du rotor sous forme de bec pour améliorer la pénétration du flux périphérique du fluide et d'autre part,ont leur bord intérieur recourbé également vers l'arrière du rotor en forme de bec pour favoriser la transformation du flux périphérique en flux central.

Le rotor peut comporter des pales limitées aux espaces interaubes dont le bord avant s'étend radialement et sur une portion de circonférence entre les aubes,dans un espace compris entre la base et le sommet de celle-ci,afin de canaliser vers l'arrière le flux périphérique du fluide.

La partie rayonnante de l'aube peut s'atténuer ou disparaître au niveau de l'avant du prolongement de la pale et recroit ou renait ensuite pour aller sa raccorder à la pale suivante.

L'intérieur des pales peut être solidarisé à l'arbre du rotor dont le diamètre va en s'évasant le long de son axe,afin de former une turbine fermée ou semiouverte.

Selon un mode de réalisation préférentiel ,les pales dépassent l'arrière et le plus grand diamêtre des aubes du rotor et génèrent une turbine centrifuge dont l'extrèmité des pales est dirigée latéralement vers l'extérieur et présente au niveau de la sortie de la turbine une surface arrière inclinée vis à vis de l'axe de rotation.

Selon une premiére variante de réalisation de la machine selon l'invention l'enveloppe circulaire qui entoure extérieurement le rotor, est statique et définit une entrée axiale du flux vers le rotor,et est solidaire intérieurement à au moins une lame qui imprime ensuite une orientation périphérique au flux du fluide.L'entrée axiale est par exemple solidarisée aux éléments apportant le fluide par une bride.

Selon une deuxième variante, l'enveloppe circulaire est rotative , entrainée par exemple par un arbre traversant le rotor et entoure extérieurement le rotor et, définit une entrée helicoïdale pourvue intérieurement d'au moins une lame vrillée,qui oblige, par l'énergie cinétique ainsi délivrée et par la forme fuyante de la dite ou des dites lames internes,à générer un flux périphérique circulaire de fluide se raccordant au flux périphérique du rotor.

Selon une troisième variante l'enveloppe circulaire comporte en outre de l'entrée axiale fixe, un impulseur rotatif entrainé par exemple par un arbre traversant le rotor,pourvu de pales supportant des aubes enroulées en spirales et dont l'intérieur épouse le profil de la surface de révolution balayée par le bord d'attaque des aubes du rotor,les pales étant limitées aux espaces interaubes avec un bord avant s'étendant radialement et sur une portion de circonférence entre les dites aubes dans un espace compris entre la base et le sommet de celles ci,afin de canaliser vers l'arrière le flux périphérique du fluide de sorte que globalement,les lames de l'entrée axiale impriment une orientation périphérique au flux du fluide, et ensuite le dit impulseur comprime le flux de fluide l'obligeant à pénétrer entre ses aubes alors que ses pales le surpresse dans le rotor.

Selon d'autres particularités:

L'enveloppe circulaire est constituée, dans la zone de plus grand diamêtre des aubes du rotor, d'éléments parfaitement circulaires tels que, bagues cylindriques, coniques, alésages, etc...

Le nombre de pales du rotor et de lames de l'enveloppe peut être différent afin d'éviter les harmoniques pouvant être engendrés par des flux de fluide résonnants.

La machine peut être pourvue de diffuseurs disposés à l'arrière du rotor pour orienter le flux du fluide et en optimiser les forces de réaction.

Une chambre statique est prévue qui respectivement:

entoure, déborde vers l'avant puis, se recourbe vers l'intérieur de l'enveloppe circulaire ,pour former un éjecteur, complémentée ou/non,par une enveloppe statique qui enferme l'ensemble de la machine,et dont les bords des extrêmités débordent l'avant et l'arrière de la machine et se recourbent vers l'intérieur, coiffant l'ensemble en formant à l'avant un deuxième éjecteur et à l'arrière un élément de prélevement du fluide alimentant ce dernier deuxième éjecteur,de manière à adjoindre un effet inducteur au niveau du fluide admis.

La ou les lames de l'enveloppe circulaire au niveau de la partie centrale avant,s'éloignent de la surface de révolution décrite par le bord d'attaque des aubes du rotor et vont éventuellement jusqu'à disparaitre pour définir une ouverture centrale notament quand il n'y a pas d'arbre.

Le segment plan défini par le profil de la surface de révolution balayée par le bord d'attaque des aubes du rotor,et les éléments circulaires de l'enveloppe circulaire, et/ou non une bague détanchéité connue en elle même prévue sur l'avant du flasque de la turbine centrifuge au moins semi-fermée disposée en arrière du rotor,et/ou non l'alésage arrière de la chambre statique,sont disposés en vis à vis et ont des jeux calibrés.

Une telle machine peut-être utilisée comme élément propulseur ou générateur, et alors les canaux de la turbine centrifuge sont pourvus d'injecteurs reliés à une alimentation de fluide et/ou d'électrodes alimentées électriquement.

De façon avantageuse un palier fluide constitué d'alvéoles qui sont mises en communication par des orifices de section réduite avec une arrivée de fluide sous pression ,est disposé soit dans l'alésage de la bague d'étanchéité connue en elle même prévue sur l'avant de la turbine centrifuge au moins semi-fermée disposée en arrière du rotor dans le cas de l'enveloppe circulaire rotative,soit dans le cas de l'enveloppe circulaire fixe avec impulseur, dans l'alésage située à l'arrière de l'entrée axiale statique ,et destiné à centrer respectivement l'arrière de l'enveloppe rotative, ou l'arrière de l'impulseur .

Des dessins sont joints qui ne sont donnés qu'à titre indicatif et non limitatif,cette machine étant décrite avec des éléments géométriques de base volontairement schématisés afin de mieux faciliter la compréhension de formes extrêmement complexes. En pratique les formes sont adoucies et arrondies afin d'harmoniser et favoriser l'écoulement des flux de fluide.

Il sera fait référence aux dessins suivants:

- la figure 1 est une vue de dessous d'une machine conforme à l'invention,
- la figure 2 est la vue en élévation d'un rotor et la vue en coupe d'une enveloppe circulaire ,de la machine de la figure précedente,et montre en sortie des diffuseurs sous forme de plaques.
- la figure 3 est la vue de dessus de la même machine,
- la figure 4 montre un exemple de pales et quelques coupes correspondantes,
- la figure 5 expose un type de profil de rotor avec un segment plan en arrière,
- la figure 6 est la vue d'une aube en élévation et en vue de dessus, et présente quelques coupes correspondantes, la vue en élevation fait apparaître la variation du pas croissant avec l'augmentation du diamêtre.
- la figure 7 est une vue d'un rotor comportant des pales limitées aux espaces inter-aubes,
- les figures 8 et 15 montrent des eveloppes avec entrées hélicoïdales et leurs lames vrillées, vue en coupe et en vue de dessus,
- la figure 9 représente une vue en élévation d'un impulseur rotatif,

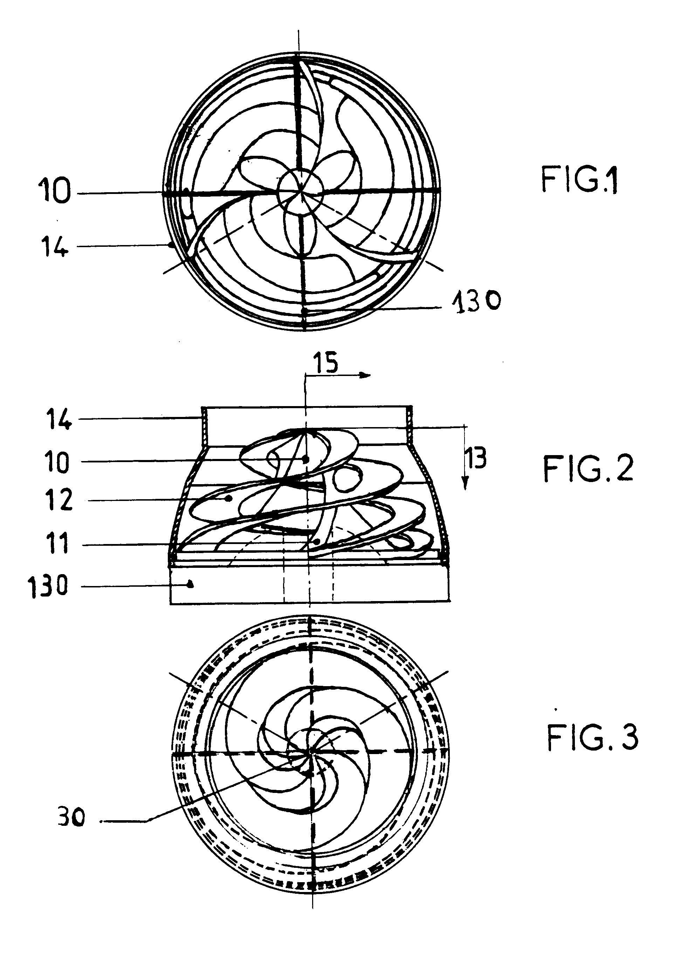

- la figure 1∅ est un rotor transformé en turbine centrifuge dont les bouts de pales sont dirigés vers l'arrière et inclinés vis à vis de l'axe de rotation,représentés en vue de dessous et en élévation,

Pour faciliter la compréhension des dessins suivants,il a été représenté les coupes des volumes de révolution balayés par les éléments précédemment mieux détaillés.

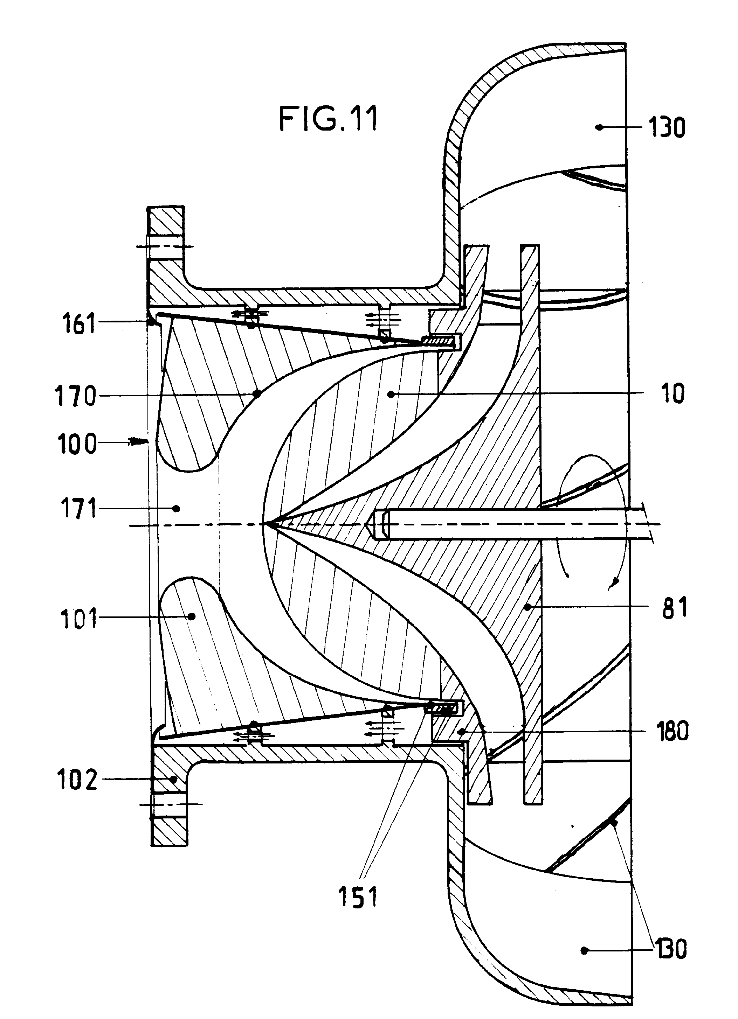

- la figure 11 montre une machine dont l'enveloppe circulaire est statique,les lames se sont éloignées du rotor et ont disparu du centre,

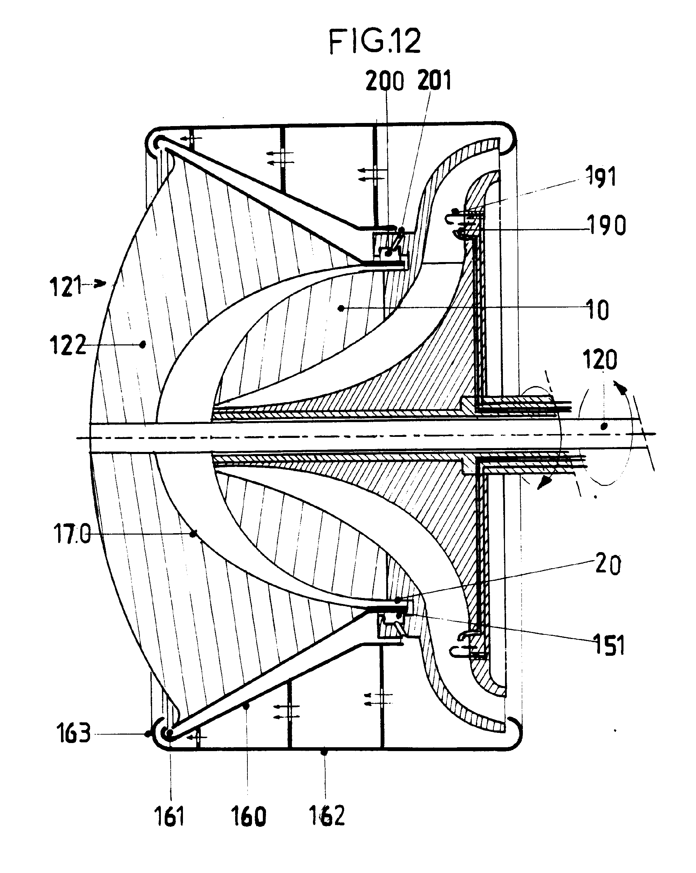

- la figure 12 montre une machine dont l'enveloppe circulaire est rotative et entrainée par un arbre traversant le rotor,nous voyons apparaitre des électrodes,des injecteurs,les chambres et enveloppes statiques avec leurs éjecteurs,les etancheités à jeux controlés,et le palier fluide.

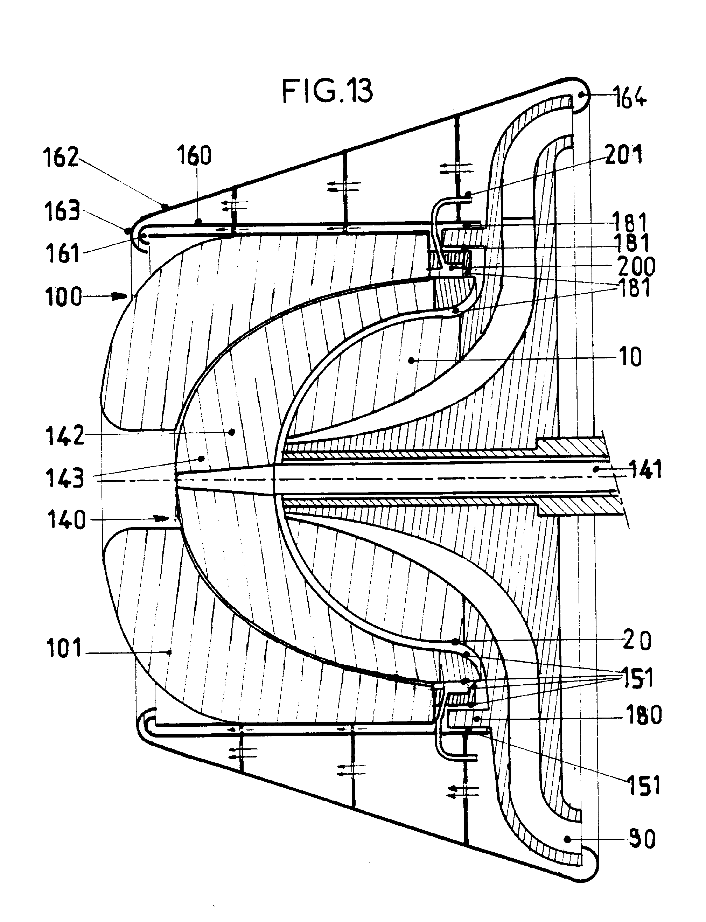

- la figure 13 montre une machine dont l'enveloppe circulaire comporte une entrée axiale fixe,et un impulseur rotatif entrainé par un arbre traversant le rotor,sont également montrées les étanchéités à jeux controlés,et le palier fluide.

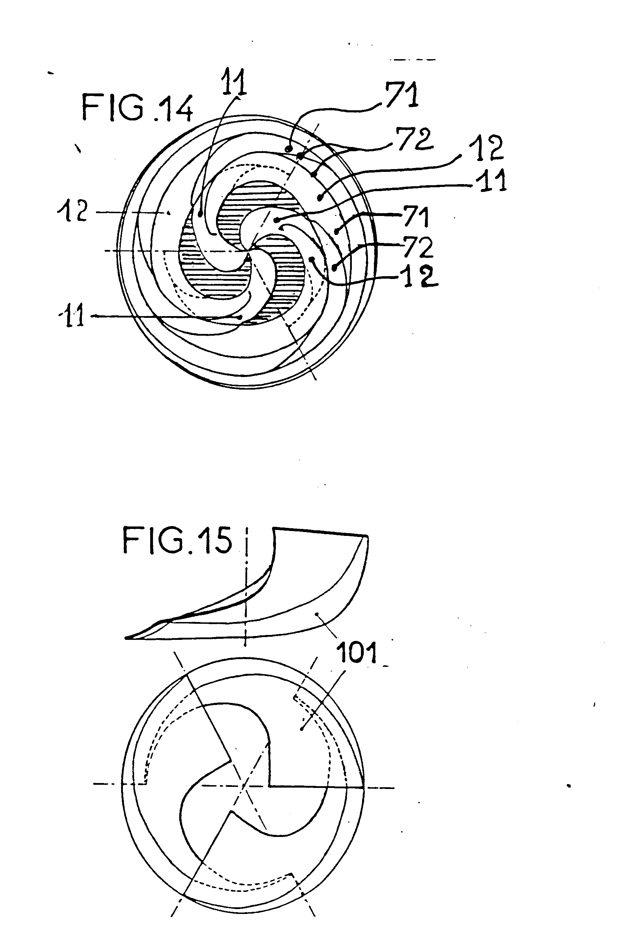

- la figure 14 montre sur un rotor la disparition et la réapparition de l'aube rayonnante.

En référence à ces dessins cette machine est constituée par:

Des pales 11 en forme d'hélice.Sur l'avant de cette hélice sont fixées et enroulées en spirale des aubes 12. Cet ensemble forme un rotor 1Ø. Les pales 11 et les aubes 12 se confondent 3Ø à l'avant du rotor 1Ø afin de ne présenter qu'un nombre minimum d'arête pouvant déranger le flux du fluide qui se présente au centre du rotor 1Ø.

Le bord d'attaque présenté par l'aube 12 qui couvre la pale 11,croit en diamêtre 15 suivant flèche et avance simultanément longitudinalement 13 suivant flèche pénétrant et happant les veines de fluide qui tendent à s'échapper vers l'extérieur.

Une enveloppe circulaire 14 antagoniste entourant le rotor 1Ø s'oppose à la fuite du fluide et le comprime.Elle est pourvue à cet effet d'élément compressifs.Il est à noter qu'après la séparation des pales 11 et des aubes 12 le fluide bénéficie de deux voies de dégagement dans le rotor1Ø:soit il passe directement dèrrière le rotor 1Ø en empruntant l'espace compris sous l'intérieur de l'aube 12 située sur le diamêtre immédiatement supérieur,soit il s'échappe en voyageant entre les aubes 12. Si l'arrière du rotor 1Ø est au moins partiellement bouché le seul échappatoire reste l'extérieur,mais l'enveloppe circulaire 14 interdisant une expansion rayonnante et reculante il s'ensuit une surpression locale tendant à forcer la pénétration du fluide dans le rotor 1Ø. Les éléments cités sont représentés figures 1, 2 et 3.

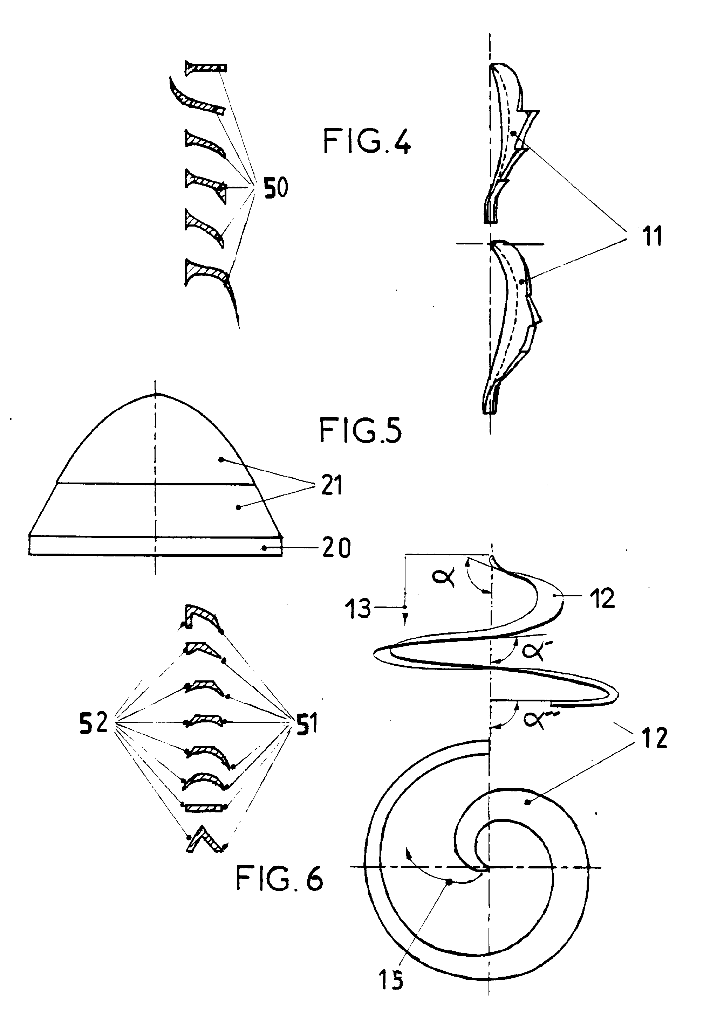

La pénétration des veines de fluide sera d'autant facilitée que les bords des pales 11 et des aubes 12 seront profilés dans le sens de l'écoulement du fluide:les bords se présentent sous forme de bec. Les pales 11 ont leurs bord avant 5Ø qui tend à a'allonger entre les aubes 12 ,l'arrière soit fuit dans le fluide ou se raccorde en s'évasant sur un élément complémentaire, par exemple un flasque. Les aubes 12 ont leur bord d'attaque extérieur 51 présentent un affûtage qui est déterminé selon un compromis de tolérance entre l'acceptation et le refus du fluide,leur bord interne 52 est un élément d'introduction du fluide extérieur vers l'intérieur et de guidage du flux interne.Le corps de l'aube 12 compris entre le bec extérieur 51 et le bec intérieur 52 à de façon préférentielle une forme convexe vers l'arrière et concave vers l'avant,pour complémenter en poussant le fluide, l'action des dits becs extérieurs 51 et intérieurs 52. Les figures 4 et 6 illustrent ce qui est précedemment exposé.

Le profil de la surface de révolution balayée par le bord des aubes 12, présente un segment plan 2Ø sensiblement parallèle à l'axe, placé à l'arrière du rotor 1Ø, pour permetre d'assurer une étanchéité avec une bague qui sera située en vis à vis. Le dit profil converge ensuite vers l'avant 21. La forme semisphérique est préférée,toutefois des formes coniques, ogivales, voir localement perpendiculaires vis à vis de l'axe de rotation sont sélectionnées selon les différents parametres des problèmes à résoudre. La figure 5 évoque un exemple de profil.

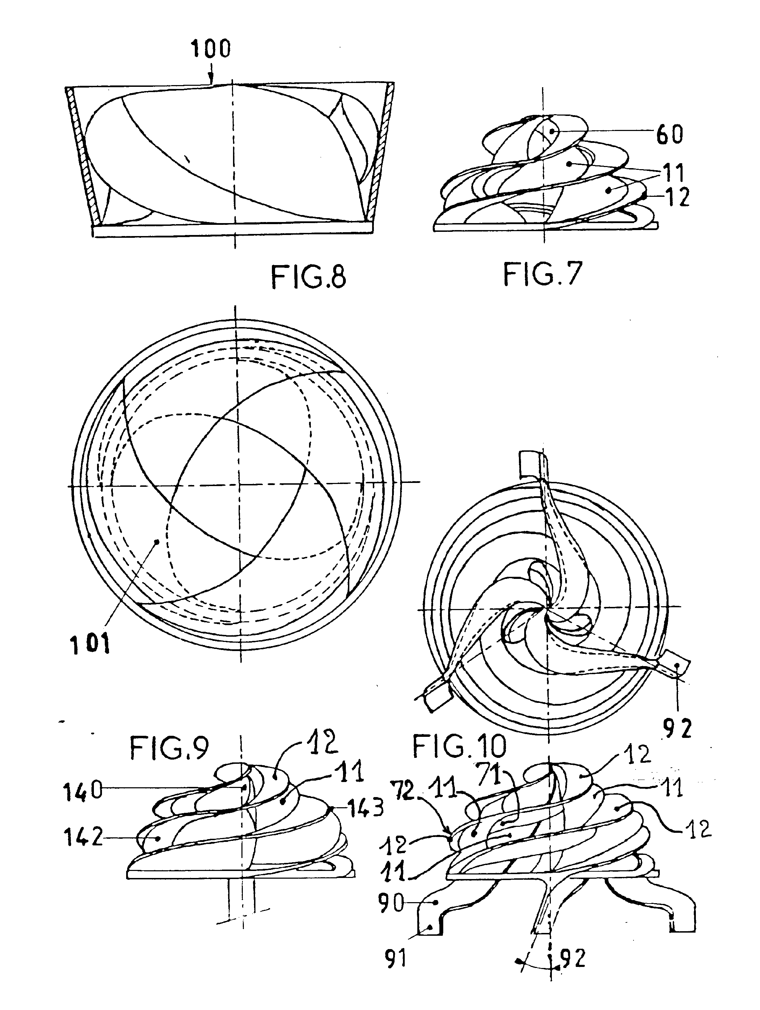

Dans une disposition particulière, le rotor 1Ø a des pales 11 qui ne sont contenues que dans l'espace inter-aubes 6Ø. Elles s'étendent radialement entre les aubes 12 sur une portion de circonférence. Elles maintiennent mécaniquement les aubes 12 entre elles et facilitent l'introduction du fluide vers l'intérieur du rotor 1Ø ou repoussent les veines de fluide vers les éléments compressifs de l'enveloppe circulaire.La figure 7 représente ce type de disposition.

Lorsque les pales 11 dépassent l'arrière et le plus grand diamètre de aubes 12 , le rotor 1Ø bénéficie alors de fait de la force centrifuge, ce qui crée donc une turbine centrifuge 9Ø. Le bout des pales 11 projettent le fluide vers l'extérieur. Dans une disposition préférentielle, le bout des pales est orienté vers l'arrière 9I. La turbine étant soit fermée, soit ouverte et contenue dans un corps,le fluide est alors rejeté vers l'arrière. Afin de bénéficier des réactions incidentes du flux de fluide sur la rotation de la turbine centrifuge, les bouts des pales 11 sont de façon également préférée; inclinées 92 vis à vis de l'axe de rotation . La figure 1Ø est un exemple de ce qui précède.

Le pas des aubes 12 diminue en s'éloignant de l'axe ,car la vitesse du fluide à l'oeillard est plus grande au centre qu'à la périphérie de l'enveloppe 14 et l'inclinaison de l'aube 12 est relative à cette vitesse.

Selon la figure 14 ou les parties hachurées corespondes à des espaces vides, la partie rayonnante de l'aube 12 s'atténue ou disparaît au niveau de l'avant 71 du prolongement de la pale 11 et recroit ou renait 72 ensuite pour aller se raccorder à la pale 11 suivante, de façon à permettre un meilleur remplissage du dos de la pale. L'intérieur ou arrière des pales 11 peut être solidarisé à l'arbre dont le diamètre va en s'évasant formant en quelque sorte un flasque en forme de bouclier, permettant ainsi la réalisation de turbines centrifuges ouvertes ou semi-ouvertes. Le nombre de pales 11 et de lames 1Ø1 peut être différent afin d'éviter les harmoniques engendrés par des flux de fluide résonnants. Des diffuseurs 13Ø sont disposés à l'arrière de la machine afin d'orienter le flux du fluide et d'en optimiser les forces de réaction. La machine ne peut être éfficace sans l'enveloppe antagoniste circulaire 14. L'enveloppe qui est fixe présente une entrée axiale 1ØØ avant qui contient antageusement des lames 1Ø1 qui forment des canaux internes et qui s'inclinent de façon progressive dans la direction de la rotation du rotor. Une solution intéressante consiste à éloigner dans leur zone arrière 170 les lames 101 du rotor 10 vers le centre et même à supprimer les lames 101 dans cette même zone définissant une ouverture 171. C'est vers le centre, en effet, que le flux est généralement le moins perturbé dans une arrivée de fluide amené par une canalisation. Les lames 101 situées au plus près de l'axe, de par la finesse des toiles de construction qu'elles exigent présentent des inconvénients supérieurs au gain que permettrait d'espèrer un meilleur guidage du fluide dans cette partie centrale. La liberté donnée au fluide par un espacement plus grand, entre les lames 101 et le rotor 10, permet d'obtenir avec moins d'éfficacité mais plus de souplesse la transformation de l'orientation du flux du fluide dans les canaux formés par les lames 101. L'enveloppe circulaire 14 statique est souvent enfermée dans une chemise et/ou un corps qui sera solidarisé aux éléments d'amenée du fluide, par exemple par une bride 102. La figure 11 représente l'exemple de telles dispositions.

L'enveloppe circulaire 14 , dans la variante illustrée en figure 12 est rotative, elle présente une entrée hélicoïdale 121 formée de lames 122 qui sont vrillées. Son entraînement peut être éffectué par un arbre 120 qui traversera par exemple le rotor 10. Si l'entrainement se fait par l'extérieur, sans arbre central, les lames 122 de l'enveloppe circulaire 14 rotative s'ouvriront au centre pour faciliter l'introduction du fluide dans cette zone privilégiée. L'éloignement des lames 122 de l'enveloppe circulaire 14 rotative dans leur zone arrière 170, des aubes 12 du rotor 10 est également une éventuelle formule améliorant la souplesse "hydraulique" du système.

Une troisème formule de réalisation de l'enveloppe circulaire 14 est illustrée en figure 13 et est contituée en partant de l'avant:

- de l'enveloppe circulaire 14 statique qui présente une entrée axiale 100 tel que décrit précèdemment,
- d'un impulseur 140 rotatif entrainé par un arbre 141 qui peut traverser, de façon préférentielle, le rotor 10 et qui coiffe extérieurement le dit rotor 10.

L'impulseur 140 est constitué :

- d'aubes 143 enroulées en spirales présentant un caractère commun avec les aubes 12 précèdemment décrites
- de pales 142 présentant de la même façon un caractère commun évident avec les pales 11 limitées aux espaces interaubes 60.

Le fluide pénètre par l'entrée axiale 100 et se trouve dévié par les lames 101 de l'enveloppe circulaire 14 statique, qui l'oriente vers la périphérie dans le même sens que le sens de rotation de l'impulseur 140.Il est ainsi comprimé et pénètre entre les aubes 143 de l'impulseur aidé par les pales 142 situées dans l'espace inter-aubes. Le flux est présenté sous l'impulseur 140 au rotor 10 avec une surpression souhaitée. Les figures 7,9,11 et 13 montrent des exemples de réalisation de cette formule.

Nous remarquons des points complèmentaires et particulièrement :

près du haut des aubes 12 du rotor 10 se trouve un segment plan 20 et selon les variantes possibles de l'enveloppe circulaire 14, nous trouvons des surfaces circulaires 151, alésage, bagues, etc.. superposées, toutes suceptibles d'assurer des étanchéités à l'aide de jeux calibrés 181.

Sont également concernés, la bague d'étanchéité 180 connue en elle-même sur le flasque avant des turbines centrifuges 90, l'arrière de l'impulseur 140 et l'alésage d'une chambre statique 160 qui entoure le dispositif circulairee 14 de façon préférentielle.

Néanmoins, ces étanchéités réalisées entre des surfaces circulaires à faibles jeux ne sont jamais totalement, étanches et malgré un laminage parfois intense, une fuite existe. La chambre statique 160 permet de reconduire ces fuites et d'en bénéficier en les réintroduisant à l'avant de l'enveloppe circulaire 14 à l'aide d'un injecteur 161 qui se recourbe sur l'avant de l'enveloppe circulaire 14; Le fluide aspiré profite d'un effet inductif offert par l'éjecteur 161 qui facilite l'introduction du dit fluide

Une enveloppe statique 162 qui coiffe toute la machine présente un intérêt complémentaire en ce sens qu'elle permet d'adjoindre un deuxieme éjecteur 163. Ce dernier va chercher son fluide moteur sur la sortie de la turbine centifuge 90 à l'aide d'un dispositif de prélèvement 164 qui est en quelque sorte un éjecteur inversé.Les figures 11 12 et 13 montrent des exemples de telles implantations.

Cette machine est utilisable comme propulseur par le biais de l'utilisation de la force éxercée par le différentiel de pression réalisé entre les surfaces avant et arrière. Une augmentation importante des vitesses de sortie est obtenue par exemple en introduisant et en enflammant un carburant à l'aide d'injecteurs 190 et d'électrodes 191 dans les canaux de la turbine centrifuge. Ces injecteurs 190 et ces électrodes 191 peuvent remplir d'autres fonctions telles que mélanges de fluides, modifications des conditions électrisantes locales etc.. Ces éléments sont illustés figure 12.

Enfin la bague d'étanchéité connue en elle-même 180 située à l'avant du flasque de la turbine centrifuge 90, ou l'alésage situé en arrière de l'entrée axiale 100 statique qui contient l'impulseur 140, reçoit de façon avantageuse un palier fluide constitué d'alvéoles 200 alimentées par des orifices 201 calibrés, avec un fluide sous pression. Le but recherché par l'utilisation de ce palier fluide est le maintien mécanique relatif des bagues en présence car l'enveloppe circulaire 14 lorsqu'elle est rotative,que ce soit avec une entrée hélicoïdale 121 ou sous forme d'im-

pulseur 14Ø, trouve son point de solidarisation avec l'arbre très largement décalé par rapport au niveau de l'arrière de la dite enveloppe circulaire 14.

L'ensemble se trouve donc mieux maintenue et un centrage relatif évite des frictions préjudiciables. Ces différents éléments sont mentionnés sur les figure 12 et 13

L'invention n'est, de toute façon, pas limitée aux réalisations décrites mais en couvre, au contraire, toutes les variantes qui pourraient leur être apportées sans sortir de leur cadre ni de leur esprit. Notamment l'adjonction de dispositifs de refroidissement permettant d'abaisser la température du fluide recyclé,et toutes les dispositions connues pour la réalisation des pompes et compresseurs centrifuges sont complémentaires et applicables à la présente invention. La rigidification de la construction de ce type de machine est amplement améliorée par l'adjonction de congés qui concourent également vers l'obtention d'un meilleur aérodynamisme des circuits internes. Il y aura donc lieu de bien admettre qu'en gardant l'essentiel du caractère général de la machine décrit plus haut, les évolutions de forme qui découlent des lois conventionnelles et instinctives d'écoulement des fluides et de construction mécanique, feront partie de la présente invention.

La construction des machines,des pompes,des turbines,des propulseurs ,etc..selon la présente invention peut être réalisée en matières coulées dans des moules ou outillages en utilisant notamment les techniques de cire perdue.Des solutions par assemblage de pièces initialement séparées, par exemple de toles embouties, sont également adaptées.Les métaux,les matériaux composites,les matière plastiques,et tous leurs hybrides,sont utilisables.

L'application des machines de la présente invention concerne tous les tranferts de fluides gazeux, liquides, ou pâteux. Les pompes à vide, les compresseurs de gaz,et la recompression de vapeur d'eau, sont particulièrement concernés.Dans l'ensemble tous les fluides sous faible pression absolue ou en équilibre de tension de vapeur sont intéressés.La transformation de l'énergie en force, par le biais des différences de pressions et de vitesses exercées entre les surfaces d'aspiration et de refoulement, permet d'envisager l'emploi de cette machine partout ou l'application d'une force est utile:asservissement, génération de pression, transfert de masses,etc... L'adjonction d'injecteurs et d'électrodes permet de réaliser des interactions entre les éléments mis en présence (fluides,carburants,comburants,électricité,etc) et autorise l'utilisation de cette machine comme propulseur ou générateur notamment.

**Revendications**

1. Machine rotative à déplacement non positif utilisable comme pompe, compresseur, propulseur, générateur,ou turbine motrice, du type comportant au moins une aube enroulée en spirale creuse et au moins une pale située autour de l'axe de rotation de la dite machine,contenues dans une enveloppe circulaire entourant exterieurement le rotor de manière à former une entrée d'amenée du fluide et à s'opposer à sa fuite, caractérisée en ce que d'une part,la dite pale (11) reçoit sur l'avant de son bord extérieur la dite aube (12) progressant toutes deux avec un pas différent mais simultanément tant diamêtralement(15) que longitudinalement (13) vis à vis de l'axe de rotation et d'autre part,l'enveloppe circulaire (14) placée en amont du rotor (1Ø) comporte des éléments de compression du fluide diminuant, en allant vers l'arrière, l'espace relatif disponible, pour le fluide ,de sorte à ce que le dit fluide soit entrainé d'abord par les aubes (12) du rotor (1Ø) en un flux périphérique contenu et, comprimé par l'enveloppe circulaire(14) forçant l'entrée du fluide et canalisé ensuite par les pales (11) du rotor (1Ø) en un flux central.

2. Machine rotative à déplacement non positif selon la revendication 1 caractèrisée par le fait que le profil de la surface de révolution balayée par le bord d'attaque des aubes (12) est délimité latéralement de part et d'autre de son axe de symétrie par un segment plan(2Ø) sensiblement parallèle à l'axe ou légerèment conique,vers l'arrière du rotor(1Ø),et prolongé ensuite par un segment convergeant(21) vers l'avant du rotor(1Ø).

3. Machine rotative à déplacement non positif selon l'une quelconque des revendications précédentes caractèrisée par le fait qu'à sa naissance au plus près de l'axe chaque pale(11) se confond(3Ø) avec une aube(12),puis celles-ci voyagent momentanément ensemble.

4. Machine rotative à déplacement non positif selon l'une quelconque des revendications précédentes carctérisées par le fait que le pas des aubes (12) diminue en s'éloignant de l'axe.

5. Machine rotative à déplacement non positif selon l'une quelconque des revendications précédentes caractèrisée par le fait que les pales(11)présentent un bord périphérique(5Ø) allongé entre les aubes(12)et recourbé dans le sens de rotation du rotor(1Ø) et en ce que les dites aubes(12) ont d'une part leur bord d'attaque extérieur(51) qui s'incline vers l'arrière du rotor(1Ø) sous forme de bec pour améliorer la pénétration du flux périphérique du fluide et d'autre part ont leur bord intérieur (52) recourbé également vers l'arrière du rotor (1Ø) en forme de bec pour favoriser la transformation du flux périphérique en flux central.

6. Machine rotative à déplacement non positif selon la revendication 5 caractérisée par le fait que le rotor(1Ø) comporte des pales(11)limitées aux espaces inter-aubes(6Ø) et dont le bord avant s'étend radialement et sur une portion de circonférence entre les aubes(12) dans un espace compris entre la base et le sommet de celle-ci afin de canaliser vers l'arrière le flux périphérique du fluide.

7. Machine rotative à déplacement non positif selon la revendication 5 ou 6 caractèrisée en ce que lors de sa progression la partie rayonnante de l'aube (12) s'atténue ou disparaît au niveau de la partie avant correspondante au prolongement (51) de la pale (11) suivante et recroit ou renait ensuite pour aller se raccorder à la pale (11) qui fait suite.

8. Machine rotative à déplacement non positif selon les revendications 5 ou 7 carctérisée en ce que l'intérieur des pales (11) est solidarisé à l'arbre (81) du rotor (1Ø) dont le diamètre va en s'évasant le long de son axe, afin de former une turbine fermée ou semi-ouverte.

9. Machine rotative à déplacement non positif selon l'une quelconque des revendications 1 à 5 et 7 et 8 dont les pales(11) dépassent l'arrière et le plus grand diamètre des aubes(12) du rotor(1Ø)pour générer une turbine centrifuge(9Ø) caractérisée par le fait que l'extrèmité(91) des dites pales(11) est dirigée latéralement vers l'extérieur et présente une surface extrême au niveau de la sortie de la turbine dirigée vers l'arrière et inclinée vis à vis de l'axe de rotation(92)

10. Machine rotative à déplacement non positif selon la revendication 1 comprenant une enveloppe circulaire statique qui entoure extérieurement le rotor(1Ø) ,et défini d'abord une entrée axiale (1ØØ) du flux vers le rotor(1Ø),caractèrisé en ce que les éléments de compression du fluide de la dite enveloppe comportent solidarisé intérieurement à celle ci,au moins une lame (1Ø1) d'un profil circulaire arriére concave entourant au moins partiellement la forme protubérante de la surface de révolution des aubes (12) ou des pales (11)du rotor,et qui imprime ensuite une orientation périphérique au flux du fluide ,cette dite entrée axiale(1ØØ)étant par exemple solidarisée aux éléments apportant le fluide par une bride(1Ø2).

11. Machine rotative à déplacement non positif selon la revendication 1Ø caractérisée en ce que le nombre de pales (11), et de lames (1Ø1) est dif-férent afin d'éviter les harmoniques engendrées par des flux de fluide résonnants.

12. Machine rotative à déplacement non positif selon la revendication 1 caractérisée par le fait que l'enveloppe circulaire(14), est rotative , entrainée par exemple par un arbre(12Ø) traversant le rotor(1Ø) et,entoure extérieurement le rotor(1Ø) et définit une entrée helicoïdale(121) comprenant les élèments de compression du fluide et est pourvue intérieurement d'au moins une lame (122)vrillée,qui oblige, par l'énergie cinétique ainsi délivrée et par la forme fuyante de la dite (ou des dites)lame(s) interne(s)(122),à générer un flux périphérique circulaire compressif de fluide se raccordant au flux périphérique du rotor(1Ø).

13. Machine rotative à déplacement non positif selon l'une des revendications précédentes caractérisée en ce que des diffuseurs (13Ø) sont disposés à l'arrière de la machine pour orienter le flux du fluide et en optimiser les forces de réaction.

14. Machine rotative à déplacement non positif selon l'ensemble des revendications 1,1Øet11 caractèrisée par le fait que l'enveloppe circulaire (14) comporte en outre de l'entrée axiale(1ØØ) fixe , un impulseur(14Ø) rotatif situé entre l'entrée axiale(1ØØ) et le rotor(1Ø)entrainé par exemple par un arbre(141)traversant le dit rotor(1Ø), pourvu de pales (142) supportant des aubes(143) enroulées en spirales et dont l'intérieur épouse le profil de la surface de révolution balayée par le bord d'attaque des aubes(12) du rotor(1Ø), les pales(142) étant limitées aux espaces interaubes avec un bord avant s'étendant radialement et sur une portion de circonférence entre les dites aubes(143)dans un espace compris entre la base et le sommêt de celles ci afin de canaliser vers l'arrière le flux périphérique du fluide de sorte que globalement les lames(1Ø1) fixes des éléments de compression du fluide de l'entrée axiale (1ØØ) impriment une orientation périphérique au flux du fluide, et ensuite le dit impulseur(14Ø) comprime le flux du fluide l'obligeant à pénétrer entre ses aubes(143)alors que ses pales(142) le surpresse dans le rotor(1Ø).

15. Machine rotative à déplacement non positif selon l'une quelconque des revendications 1,1Ø,12 et 14 ,caractèrisée par le fait que l'enveloppe statique (14)est constituée, dans la zone de plus grand diamètre des aubes(12)du rotor(1Ø),d'éléments parfaitement circulaires(151)tels que, bagues cylindriques, coniques, alésages, etc...

16. Machine rotative à déplacement non positif selon l'une quelconque des revendications 1et 1Ø à 15

caractèrisée par le fait qu'une chambre statique(16Ø),respectivement:entoure, déborde vers l'avant puis, se recourbe vers l'intérieur de l'enveloppe circulaire (14),pour former un éjecteur (161), complémentée ou/non,par un carter statique (162) qui enferme l'ensemble de la machine,et dont les bords des extrêmités débordent l'avant et l'arrière de la machine et se recourbent vers l'intérieur, coiffant l'ensemble en formant à l'avant un deuxième éjecteur (163) et à l'arrière un élément de prélevement (164) du fluide alimentant ce dernier deuxième éjecteur (163),de manière à adjoindre un effet inducteur au niveau du fluide admis.

17. Machine rotative à déplacement non positif selon l'une quelconque des revendications 1Ø à 15, caractèrisée par le fait que la ou les lames(1Ø1)(142)de l'enveloppe circulaire (14) au niveau de la partie centrale avant s'éloignent(17Ø) de la surface de révolution décrite par le bord d'attaque des aubes (12)du rotor(1Ø) et vont jusqu'à disparaître pour définir une ouverture centrale(171).

18. Machine rotative à déplacement non positif selon l'ensemble des revendications 1, 2, 9, 14 et 15, caractèrisée par le fait que le segment plan(2Ø) défini par le profil de la surface de révolution balayée par le bord d'attaque des aubes(12) du rotor(1Ø) ,et les éléments circulaires(151)du dispositif circulaire (14), et/ou non une bague détanchéité connue en elle même(18Ø)prévue sur l'avant du flasque de la turbine centrifuge (9Ø) au moins semi-fermée disposée en arrière du rotor (1Ø),et/ou non l'alésage arrière de la chambre statique (16Ø), sont disposés en vis à vis et ont des jeux calibrés(181).

19. Machine rotative à déplacement non positif selon les vendications 1 et 9,utilisable comme élément propulseur, caractèrisée par le fait que les canaux de la turbine centrifuge (9Ø)sont pourvus d'injecteurs(19Ø) reliés à une alimentation de fluide et/ou d'électrodes(191) alimentées électriquement.

20. Machine rotative à déplacement non positif selon les revendications 9 et 18 et l'une des revendications 12 ou 14, caractèrisée par le fait qu'un palier fluide constitué d'alvéoles (2ØØ) qui sont mises en communication par des orifices (2Ø1) de section réduite avec une arrivée de fluide sous pression ,est disposé: soit dans l'alésage de la bague d'étanchéité connue en elle même(18Ø)prévue sur l'avant de la turbine centrifuge(9Ø)au moins semi-fermée disposée en arrière du rotor(1Ø-),soit dans l'alésage situé à l'arrière de l'entrée

axiale(1ØØ) statique, et destiné à centrer respectivement l'arrière de l'enveloppe circulaire rotative121, ou l'arrière de l'impulseur 14Ø.

**Patentansprüche**

1. Strömungsmaschine, verwendbar als Pumpe, Kompressor, Triebwerk, Generator oder Antriebsturbine von einem Typ umfassend wenigstens eine als hohle Spirale gewundene Schaufel und wenigstens ein um die Rotationsachse der genannten Maschine angeordnetes Blatt, wobei Schaufel und Blatt in einer kreisförmigen Umhüllung enthalten sind, welche den Rotor äußerlich umhüllt, um einen Eintritt für ein Fluid zu bilden und dessen Entweichen zu verhindern, dadurch gekennzeichnet, daß einerseits das genannte Blatt (11) vorne an seiner Außenkannte mit der genannten Schaufel (12) zusammentrifft, wobei beide mit unterschiedlicher Steigung, aber gleichzeitig sowohl diametral (15) als auch longitudinal (13) gegenüber der Rotationsachse verlaufen, und daß andererseits die am Vorderende des Rotors (10) angeordnete kreisförmige Umhüllung (14) Kompressionselemente für das Fluid aufweist, welche den für das Fluid verfügbaren relativen Raum nach hinten hin verringern, so daß das Fluid zuerst von den Schaufeln (12) des Rotors (10) in einen peripheren Fluß mitgenommen und durch die die Zufuhr des Fluids erzwingende kreisförmige Umhüllung komprimiert und dann von den Blättern (11) des Rotors (10) in einen zentralen Fluß kanalisiert wire.

2. Strömungsmaschine gemäß Anspruch 1, dadurch gekennzeichnet, daß das Profil der Rotations-Hüllfläche der Angriffskante der Schaufeln (12) seitlich beiderseits seiner Symmetrieachse im hinteren Teil des Rotors (10) von einem ehenen ahechnitt (20) heerenzt wird welcher im wesentlichen parallel zur Achse oder leicht konisch zu ihr ist, und zum vorderen Teil des Rotors (10) hin von einem zusammenlaufenden Abschnitt (21) verlängert ist.

3. Strömungsmaschine nach einem der vorangegangenen Ansprüche, dadurch gekennzeichnet, daß jedes Blatt (11) sich an seinem nächst zur Achse gelegenen Anfang mit einer Schaufel (12) verbindet (30) und daß beide kurzzeitig einer gemeinsamen Verlauf besitzen.

4. Strömungsmaschine nach einem der vorangegangenen Ansprüche, dadurch gekennzeichnet,

daß die Steigung der Schaufeln (12) mit zunehmender Entfernung von der Achse geringer wird.

5. Strömungsmaschine gemäß einem der vorangegangenen Ansprüche,
dadurch gekennzeichnet,
daß die Blätter (11) eine zwischen den Schaufeln (12) langgezogene und in der Rotationsrichtung der Rotors (10) gebogene Umfangskante (50) aufweisen und daß die Schaufeln (12) einerseits eine äußere Angriffskante (51), welche sich schnabelförmig zum hinteren Teil des Rotors (10) neigt, um das Eindringen des peripheren Flusses des Fluids zu verbessern, und andererseits eine ebenfalls schnabelförmig zum hinteren Teil des Rotors (10) gekrümmte innere Kante (52) aufweisen, um die Umwandlung des peripheren Flusses in einen zentralen Fluß zu begünstigen.

6. Strömungsmachine nach Anspruch 5,
dadurch gekennzeichnet,
daß der Rotor (10) Blätter (11) umfaßt, welche auf die Schaufelzwischenräume (60) begrenzt sind und deren vordere Kante sich radial und auf einem Umfangsabschnitt zwischen den Schaufeln in einem zwischen der Basis und der Spitze der genannten Schaufeln definierten Raum erstreckt, um den peripheren Fluß des Fluids nach hinten zu kanalisieren.

7. Strömungsmaschine nach Anspruch 5 oder 6,
dadurch gekennzeichnet,
daß der Umfangsteil der Schaufel (12) in Höhe des vorderen Teils (71) der Verlängerung des Blattes (11) geringer wird oder verschwindet, um danach wieder zu wachsen bzw. erneut zu erscheinen (72), um sich an das nächste Blatt (11) anzuschließen.

8. Strömungsmaschine nach Anspruch 5 oder 7,
dadurch gekennzeichnet,
daß das Innere der Blätter (11) mit der Welle (81) der Rotors (10) verbunden ist, deren Durchmesser entlang deren Achse breiter wird, um eine geschlossene oder halboffene Turbine zu bilden.

9. Strömungsmaschine nach einem der Ansprüche 1 bis 5, 7 und 8, deren Blätter (11) über den hinteren Teil und den größten Durchmesser der Schaufeln (12) des Rotors (10) ragen, um eine Zentrifugalturbine (90) zu erzeugen,
dadurch gekennzeichnet,
daß das Ende der Blätter (11) seitlich nach außen gerichtet ist und in Höhe des Turbinenausgangs eine nach hinten gerichtete und gegenüber der Rotationsachse (92) geneigte äußerste Fläche aufweist.

10. Strömungsmaschine nach Anspruch 1 umfassend eine kreisförmige statische Umhüllung, welche außen den Rotor (10) umgibt und zuerst einen axialen Eintritt (100) des Flusses zum Rotor (10) definiert,
dadurch gekennzeichnet
daß die Fluid-Kompressionselemente der genannten Umhüllung innerhalb dieser und mit ihr verbunden wenigstens eine Lamelle (101) mit einem konkaven kreisförmigen hinteren Profil umfassen, welche wenigstens teilweise den vorspringenden Abschnitt der Drehfläche der Schaufeln (12) oder der Blätter (11) des Rotors umgibt und welche dann dem Fluß des Fluids eine periphere Orientierung verleiht, wobei der axiale Eintritt (100) beispeilsweise mit den Zuführungselementen für das Fluid mittels eines Flansches (102) verbunden ist.

11. Strömungsmaschine nach Anspruch 10,
dadurch gekennzeichnet,
daß die Anzahl der Blätter (11) und der Lamellen (101) unterschiedlich ist, um die durch die mitschwingenden Flüsse des Fluids verursachten Oberschwingungen zu vermeiden.

12. Strömungsmaschine nach Anspruch 1,
dadurch gekennzeichnet,
daß die kreisförmige Umhüllung (14) drehbar ist, beispielsweise mittels einer den Rotor (10) durchdringende Welle (120) angetrieben, den Rotor (10) außen umgibt und eine die Fluid-Kompressionelemente umfassende schraubenförmige Zufuhr (121) definiert, wobei in ihrem Inneren wenigstens eine spiralig gewundene Lamelle (122) vorgesehen ist, welche zwingt, durch die auf diese Weise gelieferte kinetische Energie und durch die fliehende Form der genannten inneren Lamelle(n) (122) einen kreisförmigen peripheren Kompressionsfluß des Fluids zu generieren, welcher sich mit dem peripheren Fluß des Rotors (10) verbindet.

13. Strömungsmaschine nach einem der vorangegangenen Ansprüche,
dadurch gekennzeichnet,
daß am hinteren Ende der Maschine Diffusoren (130) angebracht sind, um den Fluß des Fluids auszurichten und die Reaktionskräfte zu optimieren.

14. Strömungsmaschine nach den Ansprüchen 1, 10 und 11 gemeinsam,
dadurch gekennzeichnet,
daß die kreisförmige Umhüllung (14) über den festen axialen Eintritt (100) hinaus einen zwischen dem axialen Eintritt (100) und den Rotor (10) angeordneten drehbaren, beispielsweise von einer den Rotor (10) durchdringenden Welle (141) angetriebenen Impulsgeber (140) umfaßt, welcher mit spiralförmig gewundene Schaufeln (143) tragenden Blättern (142) ausgestattet ist und dessen Inneres sich dem Profil der Rotations-Hüllfläche der Angriffskante der Schaufeln (12) des Rotors (10) anpaßt. wobei die Blätter (142) auf die Schaufelswischenräume begrenzt sind mit einer sich radial und auf einem Umfangsabschnitt zwischen den genannten Schaufeln innerhalb eines zwischen der Basis und der Spitze gelegnen Raums erstreckenden Vorderkante, um den peripheren Fluß des Fluids nach hinten zu kanalisieren, so daß insgesamt die festen Lamellen (101) der Fluid-Kompressionselemente des axialen Eintritts (100) dem Fluß des Fluids eine periphere Orientierung verleihen und dann der genannte Impulsgeber (140) den Fluß des Fluids komprimiert, um ihn zwischen seine Schaufeln (143) hineinzuzwängen, wogegen seine Blätter (142) ihm im Rotor (10) eine Überdruck geben.

15. Strömungssmaschine nach einem der Ansprüche 1, 10, 12 und 14,
dadurch gekennzeichnet,
daß die statische Umhüllung (14) im Bereich des größeren Durchmessers der Schaufeln (12) des Rotors (10) aus vollkommen kreisförmigen Elementen (151) besteht, wie beispielsweise zylindrischen bzw. konischen Ringen, Bohrungen usw.

16. Strömungsmaschine nach einem der Ansprüche 1 und 10 bis 15,
dadurch gekennzeichnet,
daß eine statische Kammer (160) das Innere der kreisförmigen Umhüllung (14) umgibt bzw. vorne über diese ragt, sich dann zum Inneren der kreisförmigen Umhüllung (14) biegt, um einen Ejektor (161) zu bilden, wobei die kammer ergänzt sein kann durch ein statisches Gehäuse (162), welches die gesamte Maschine umschließt, und dessen Endkanten über den vorderen und hinteren Teil der Maschine ragen und sich nach innen biegen, das Gesamte überdeckend, wobei vorne ein zweiter Ejektor (163) und hinten ein diesen speisendes Abzweigelement (164) für das Fluid gebildet werden, so daß dem zugelassenen Niveau des Fluids ein Induktionseffekt hinzugefügt wird.

17. Strömungsmaschine nach einem der Ansprüche 10 bis 15,
dadurch gekennzeichnet,
daß sich die Lamelle(n) (101) (142) der kreisförmigen Umhüllung (14) in Höhe des vorderen zentralen Teils von der durch die Angriffskante der Schaufeln (12) des Rotors (10) beschriebenen Drehfläche entfernt/entfernen (170), und sogar verschwindet/verschwinden, um eine zentral Öffnung (171) zu bilden.

18. Strömungsmaschine nach den Ansprüchen 1, 2, 9, 14 und 15 gemeinsam,
dadurch gekennzeichnet,
daß der durch das Profil der Rotations-Hüllfläche der Angriffskante der Schaufeln (12) des Rotors (10) definierte ebene Abschnitt (20) und die kreisförmigen Elemente (151) der kreisförmigen Umhüllung (14) und evtl. ein an sich bekannter, am vorderen Teil des Flansches der wenigstens halbgeschlossenen, hinter dem Rotor (10) angeordneten Zentrifugalturbine (90) vorgesehener Dichtungsring (180), und evtl. die hintere Bohrung der statischen Kammer (160), sich gegenüberstehen und ein geeichtes Spiel (181) haben.

19. Strömungsmaschine nach Ansprüchen 1 und 9, verwendbar als Antriebselement,
dadurch gekennzeichnet,
daß die Kanäle der Zentrifugalturbine (90) mit Injektoren (190) versehen sind, welche mit einer Fluid- und/oder Elektrodenzufuhr (191) verbunden sind, letzere elektisch gespeist.

20. Strömungsmaschine nach Ansprüchen 9 und 18 und einem der Ansprüche 12 oder 14,
dadurch gekennzeichnet,
daß ein Flüssigkeitslager bestehend aus Alveolen (200), welche mittels Öffnungen (201) von verringertem Durchmesser mit einer Druckflüssigkeits-Zufuhr in Verbindung gebracht sind, angeordnet ist entweder in der Bohrung des an sich bekannten, vorne an der wenigstens halbgeschlossenen hinter dem Rotor (10) angeordneten Zentralturbine (90) vorgesehenen Dichtungsrings, oder in der hinten an dem statischen exialen Eintritt (100) vorgesehenen und zur Zentrierung des hinteren Teils der drehbaren kreisförmigen Umhüllung (121) oder des hinteren Teils des Impulsgebers (140) angebrachten Bohrung.

**Claims**

1. A rotary machine having non-positive displacement, which can be used as a pump, compressor, generator or drive turbine, of a type including at' least a hollow spirally wound blade and at least a paddle arranged about the rotating centerline of said machine, housed in a circular casing which externally surrounds the rotor so as to form a fluid inlet and to prevent fluid from escaping, characterized in that, on one hand, said paddle (11) receives on the fore portion of the external edge thereof said blade (12) both extending with a different pitch but simultaneously diametrically (15) as well as longitudinally (13) with respect to the rotating centerline and, on the other hand, said circular casing (14) disposed upstream said rotor (10) comprises fluid compressing elements which reduce, in the direction of the back portion, the available relative space for the fluid, with a view to firstly driving said fluid by said rotor (10) blades (12) along a peripheral flow maintained and compressed by said circular casing (14), resulting in said fluid being admitted and then channeled by said rotor (10) blades (12) into a central flow.

2. A rotary machine having non-positive displacement as defined in claim 1, characterized in that the profile of the revolution surface swept by the leading edge of blades (12) is laterally delimited, on both sides of the symmetry axis thereof, by a flat segment (20) substantailly parallel to said axis or slightly conical, in the direction of the back end of said rotor (10), and then extended by a segment (21) converging towards the fore end of said rotor (10).

3. A rotary machine having non-positive displacement as defined in any preceding claim, characterized in that each paddle (11), at the root thereof at a position adjacent the axis, merges (30) into a blade (12) and then both momentarily move together.

4. A rotary machine having non-positive displacement as defined in any preceding claim, characterized in that blade (12) pitch decreases in a direction away from said axis.

5. A rotary machine having non-positive displacement as defined in any preceding claim, characterized in that said paddles (11) are provided with a peripheral edge (50) extending between said blades (12) and curved in the rotating direction of said rotor (10), and in that said blades (12) have, on one hand, the external leading edge thereof (51) which slants down the back end of said rotor (10) as a nose in order to improve the fluid peripheral flow penetration and, on the other hand, have likewise the internal edge (52) thereof curved towards the nose-shaped back end of said rotor (10) in order to help said peripheral flow being converted into a central flow.

6. A rotary machine having non-positive displacement as defined in claim 5, characterized in that said rotor (10) includes paddles (11) limited to inter-blade (60) spaces and the fore end of which extends radially and on a circumference portion between said blades (12) within a space between the base and the top thereof in order to backwardly channel the fluid peripheric flow.

7. A rotary machine having non-positive displacement as recited in claim 5 or 6, characterized in that the radiating portion of said blade (12) lessens or disappears at the level of the fore portion of said paddle (11) extension and then grows again or reappears to be eventually connected to the following paddle (11).

8. A rotary machine having non-positive displacement as recited in either claim 5 or 7, characterized in that the interior of said paddles (11) is integral with shaft (81) of said rotor (10), the diameter of which broadens along its axis, in order to obtain a closed or semi-opened turbine.

9. A rotary machine having non-positive displacement as recited in any claim 1 to 5 and 7 and 8, the paddles (11) of which protude from the back end and the largest diameter of said rotor (10) blades (12) to obtain a centrifugal turbine (90), characterized in that the end (91) of said paddles (11) laterally extends outwardly and includes an extreme surface past the turbine outlet which backwardly faces and slants relative to the rotating axis (92).

10. A rotary machine having non-positive displacement as recited in claim 1 including a stationary circular casing which externally surrounds said rotor (10) and at first defines a flow axial inlet (100) in the direction of said rotor (10), characterized in that fuid compressing elements of said casing include at least a strip (101) which is internally integral with it and has a concave aft circular profile which at least partially surrounds the protuding shape of the revolution surface of said blades (12) or rotor paddles (11), and which then confers a peripheral orientation of the fluid flow, with said axial inlet (100) being for example made integral with the fluid carrying elements by means of a flange (102).

11. A rotary machine having non-positive displacement as recited in claim 10, characterized in that the number of blades (11) and of strips (101) is different to inhibit harmonics generated by resonating fluid flows.

12. A rotary machine having non-positive displacement as recited in claim 1, charracterized in that said circular casing (14) is rotative, being driven for example by a shaft (120) passing through said rotor (10), and externally surrounds said rotor (10) and defines an helicoidal inlet (121) including said fluid compressing elements and is internally provided with at least a twisted strip (122) which causes, through the kinetic energy so delivered and the streamline shape of said internal strip(s) (122), a fluid compressive circular peripheral flow to be generated which is connected to the peripheral flow of said rotor (10).

13. A rotary machine having non-positive displacement as recited in any preceding claim, characterized in that diffusers (130) are arranged at the machine back end to orient the fluid flow and optimize the reaction forces thereof.

14. A rotary machine having non-positive displacement as recited in claims 1, 10 and 11, characterrized in that said circular casing (14) further includes, in addition to said stationary axial inlet (100), a rotative impeller (140) between said axial inlet (100) and said rotor (10) which is driven for example by a shaft passing throught said rotor (10), and is provided with paddles (142) which bear spirally wound blades (143), and the interior of which conforms the profile of the revolution surface swept by the leading edge of said rotor (10) blades (12), said paddles (142) being limited to the inter-blade spaces with an edge extending radially and on a circumference portion between said blades (143) in a space located between the base and the top thereof to backwardly channel the fluid peripheral flow so that, as a whole, said stationary strips (101) of said fluid compressing elements of the axial inlet (100) confer a peripheral direction to said fluid flow, and then said impeller (140) compresses said fluid flow, causing it to enter into the blades (143) thereof while the paddles (142) thereof boost it in said rotor (10).

15. A rotary machine having non-positive displacement as recited in any claim 1, 10, 12 and 14, characterized in that said stationary casing (14) includes, in the region of said rotor (10), bades (12) having the largest diameter, perfectly circular elements (151) such as cylindrical, conical rings, bores, etc.

16. A rotary machine having non-positive displacement as recited in claims 1 and 10-15, characterized in that a stationary chamber (160), respectively, surrounds, forwardly protudes, and then bends towards the interior of said circular casing (14), to form an ejector (161), supplemented or not by a stationary casing (162) which contains the whole of the machine, and the end edges of which protude from the machine front and back ends and forwardly bend, thereby covering the assembly while forming at the front end a second ejector (163) and at the back end a fluid bleeding element (164) which feeds said second ejector (163) so as to add an inducing effect past the admitted fluid.

17. A rotary machine having non-positive displacement as recited in any claim 10-15, characterized in that said strip(s) (101 ; 142) of said circular casing (14) stand away (170) past the front central portion from the revolution surface described by the leading edge of said rotor (10) blades (12) and eventually vanish to define a central opening.

18. A rotary machine having non-positive displacement as recited in any claim 1, 2, 9, 14 and 15, characterized in that said flat segment (20) which is defined by the profile of the revolution surface swept by the leading edge of said rotor (18) blades (12), and the circular elements (151) of said circular casing (14), and/or a known at least semi-closed, located in said rotor (10) back end, sealing ring (180) provided on the front end of the centrifugal turbine (90) flange, and/or the back bore of said stationary chamber (160), are oppositely disposed and have calibrated clearances (181).

19. A rotary machine having non-positive displacement as recited in claims 1 and 9, usable as a propulsing element, characterized in that channels of said centrifugal turbine (90) are provided with injectors (190) connected to a fluid supply and/or with electric electrodes (191).

20. A rotary machine having non-positive displacement as recited in claims 9 and 18, and in either claim 12 or 14, characterized in that a fluid film bearing provided with recesses (200) which communicate through reduced cross-section orifices (201) with a pressurized fluid inflow is arranged either in the bore of said known at least semi-closed, located in said rotor (10) back end, sealing ring (180) which is provided on the front end of said centrifugal turbine (90), or in the bore disposed at the back of said stationary axial inlet (100), and is adapted to respectively center the back end of said rotative circular casing (121) or the back end of said impeller (140).

FIG.1

FIG.2

FIG.3

FIG.4

50

11

FIG.5

21

20

13

α

α⁻

12

52

51

α⁻⁻

12

FIG. 6

15

FIG.8

FIG.7

FIG.9

FIG.10

FIG.11

# FIG.12

# FIG.13

FIG.14

FIG.15

101